(19) 

**Europäisches Patentamt**
**European Patent Office**
**Office européen des brevets**

(11) **EP 4 286 791 B1**

(12) **EUROPEAN PATENT SPECIFICATION**

(45) Date of publication and mention
of the grant of the patent:
**15.10.2025 Bulletin 2025/42**

(21) Application number: **21927124.4**

(22) Date of filing: **23.02.2021**

(51) International Patent Classification (IPC):
***G01B 11/25*** (2006.01)      ***G02B 27/28*** (2006.01)
***G02B 27/10*** (2006.01)

(52) Cooperative Patent Classification (CPC):
**G01B 11/2531; G02B 27/1086; G02B 27/283;**
**G02B 27/286**

(86) International application number:
**PCT/CN2021/077509**

(87) International publication number:
**WO 2022/178678 (01.09.2022 Gazette 2022/35)**

(54) **OPTICAL SYSTEM, APPARATUS, AND TERMINAL**

OPTISCHES SYSTEM, VORRICHTUNG UND ENDGERÄT

SYSTÈME OPTIQUE, APPAREIL ET TERMINAL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**06.12.2023 Bulletin 2023/49**

(73) Proprietor: **Shenzhen Yinwang Intelligent**
**Technologies Co., Ltd.**
**Shenzhen, Guangdong 518129 (CN)**

(72) Inventors:
• **LV, Xiaoyu**
**Shenzhen, Guangdong 518129 (CN)**

• **MA, Sha**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**EP-A2- 1 687 588        CN-A- 1 419 647**
**CN-A- 101 936 718      CN-A- 104 614 925**
**CN-A- 109 163 673      CN-A- 110 186 390**
**US-B1- 10 036 630**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This application relates to the field of optical technologies, and in particular, to an optical system, and an apparatus.

### BACKGROUND

A structured light measurement technology can be used to obtain three-dimensional profile information of a target. In the field of autonomous driving, the structured light measurement technology may be applied to scenarios, for example, driver identity verification, an in-vehicle monitoring system, gesture recognition, and near-distance obstacle detection.

Phase measuring profilometry (Phase Measuring Profilometry, PMP) is widely used in structured light measurement because of advantages of non-contact, high precision and a fast measurement speed. A measurement principle of the phase measuring profilometry is to transmit a sine grating stripe to a to-be-measured target, take an image of a deformed sine grating stripe modulated by the to-be-measured target, and then calculate a three-dimensional shape of the to-be-measured target from the obtained deformation image.

Currently, when the PMP is used to perform structured light measurement, grating stripes with different phases and different spatial frequencies need to be separately cast to a to-be-measured target, and a plurality of images of deformed stripes obtained by modulating by the to-be-measured target are correspondingly photographed, to calculate three-dimensional profile information of the to-be-measured target. A measurement process of the method is complex, and there are problems of poor convenience and low measurement efficiency.

CN 104614925 A discloses a projection device of a depth measurement system. The projection device includes light sources, pattern unit pairs, and a plurality of light combining units. The light sources emit illumination light beams of different wavelength bands, which are all polarized light beams with different colors, and are, for example, polarized light with a S polarization direction. The pattern unit pairs convert the illumination light beams into the patterned beams. The light combining units combine the patterned beams.

CN 109163673 A discloses a multi-wavelength and phase-shift interference dualsynchronised surface real-time measurement system. The system adopts an interference module, a light-splitting phase-shifting module and a CCD imaging module.

CN 110186390 A discloses a compact transient multi-wavelength phase-shifting interference device. The device comprises an RGB three-color laser, a single-mode optical fiber, an optical fiber collimator, a beam expansion system, a polarizing plate, a light-splitting prism, a quarter-wave plate, an imaging lens, a color polarization camera, a polarized light-splitting prism, a reference mirror, a standard lens and a measured object.

### SUMMARY

The invention is set out in the appended set of claims. This application provides an optical system, an apparatus, and a terminal, configured to synchronously cast a multi-frequency grating stripe, so as to improve convenience and efficiency of a grating stripe casting and receiving process.

According to a first aspect, this application provides an optical system. The optical system includes a light source module and an optical transmitter module. The light source module is configured to output first polarized light, where the first polarized light includes linearly polarized light of N colors, linearly polarized light of different colors has a same polarization angle and different transmission directions, and N is an integer greater than 1. The optical transmitter module is configured to receive the first polarized light, and generate second polarized light based on the first polarized light, where the second polarized light is used to cast grating stripes of the N colors, and grating stripes of different colors have different spatial frequencies.

In this solution, the light source module of the optical system cooperates with the optical transmitter module to generate, based on linearly polarized light of a plurality of colors, the second polarized light used to cast grating stripes of different spatial frequencies. Therefore, the optical system can synchronously cast a multi-frequency grating stripe, thereby simplifying a grating stripe casting process and improving convenience and efficiency of grating stripe casting. Correspondingly, the optical system can support a receive end in synchronously receiving a multi-frequency grating stripe, thereby improving convenience and efficiency of grating stripe receiving.

In a possible design, the optical system further includes an optical detection module. The optical detection module is configured to receive target polarized light corresponding to the second polarized light, and obtain a plurality of target grating stripe images based on the target polarized light, where the plurality of target grating stripe images include a plurality of target grating stripe images corresponding to each of the N colors, and initial phases of grating stripes in at least two target grating stripe images corresponding to each color are different.

In this solution, the optical system further includes the optical detection module. The optical system may independently transmit and receive light. After the light source module and the optical transmitter module cooperate to cast the second polarized light, the optical detection module may detect the target polarized light corresponding to the second polarized light, and obtain, based on the target polarized light, an image of grating stripes with a plurality of spatial frequencies and a plurality of initial phases, that is, a multi-frequency multi-phase grating stripe. Therefore, in the optical system, a plurality of images of multi-frequency multi-phase grating stripes may be determined by one time of polarized light casting and detection, so that a quantity of times of casting and collection of the multi-frequency multiphase grating stripe can be greatly reduced, and convenience and efficiency of a multi-frequency multi-phase grating stripe measurement process can be improved.

In a possible design, the target polarized light is polarized light obtained by modulating the second polarized light by a target object.

In this solution, the foregoing optical system can implement convenient and efficient profile measurement on the target object. The optical system can synchronously cast the multi-frequency grating stripe to the target object by casting the second polarized light, receives, through the optical detection module, the target polarized light obtained by modulating the second polarized light by the target object, and can obtain a corresponding multi-frequency multi-phase deformed grating stripe image after the multi-frequency grating stripe is modulated by the target object, to perform three-dimensional profile measurement on the target object base on the multi-frequency multi-phase deformed grating stripe image.

In a possible design, the optical detection module includes an imaging module and a color polarization detection module. The imaging module is configured to receive the target polarized light, where the target polarized light is used to cast initial target grating stripes of the N colors, and the initial target grating stripe is a grating stripe obtained by modulating a grating stripe cast by the second polarized light. The color polarization detection module is configured to separately perform phase shifting of at least two different phase values on an initial grating stripe corresponding to each color, and generate the plurality of target grating stripe images corresponding to each color.

In this solution, the imaging module in the optical detection module receives the target polarized light obtained by modulating the second polarized light, and the color polarization detection module in the optical detection module obtains the multi-frequency multi-phase grating stripe based on the target polarized light received by the imaging module, so that the optical detection module can obtain the multi-frequency multi-phase grating stripe in one polarized light receiving process, thereby improving efficiency of grating stripe receiving.

The light source module includes N monochromatic light sources, N angle adjustment modules, and a beam combining module. Each of the N monochromatic light sources is configured to output linearly polarized light of a corresponding color; each of the N angle adjustment modules is configured to adjust a polarization angle of linearly polarized light from a corresponding monochromatic light source to a target angle, and the beam combining module is configured to adjust transmission directions of N beams of linearly polarized light from the N angle adjustment modules to have different included angles with a target direction, to obtain the first polarized light.

In a possible design, the N monochromatic light sources are in a one-to-one correspondence with the N colors, and the N angle adjustment modules are in a one-to-one correspondence with the N monochromatic light sources.

In this solution, the light source module can separately adjust linearly polarized light emitted by different monochromatic light sources, so that beams of linearly polarized light emitted by different monochromatic light sources have a same polarization angle but different transmission directions, to further generate polarized light used to cast the multi-frequency grating stripe.

In a possible design, the angle adjustment module includes a half wave plate, and the angle adjustment module is located between the corresponding monochromatic light source and the beam combining module.

In this solution, the half wave plate is used in an angle adjustment module disposed between different monochromatic light sources and the beam combining module, so that the polarization angle of the linearly polarized light emitted by the monochromatic light source can be conveniently and quickly adjusted, and system setting complexity and element operation complexity are low.

In a possible design, the beam combining module includes N-1 beam combining elements, and a first beam combining element in the N-1 beam combining elements is configured to: transmit first linearly polarized light from a first angle adjustment module in the N angle adjustment modules, reflect second linearly polarized light from a second angle adjustment module in the N angle adjustment modules, and control transmission directions of the first linearly polarized light and the second linearly polarized light to have different included angles with the target direction; or the first beam combining element is configured to: transmit third linearly polarized light from a second beam combining element, reflect fourth linearly polarized light from a third angle adjustment module of the N angle adjustment modules, and control transmission directions of the third linearly polarized light and the fourth linearly polarized light to have different included angles with the target direction.

In this solution, the beam combining element selectively transmits or reflects received linearly polarized light, to adjust a transmission direction of the received linearly polarized light. Transmission directions of linearly polarized light emitted by a plurality of monochromatic light sources may be respectively adjusted through a plurality of beam combining elements, so that a transmission direction of each beam of linearly polarized light beams is different, and a spatial frequency of a grating stripe cast by each beam of linearly polarized light is different.

In a possible design, any beam combining element includes a dichroic beam splitter.

In this solution, a plurality of dichroic beam splitters may be used to conveniently and quickly adjust polarization angles of the linearly polarized light emitted by the plurality of monochromatic light sources, and system setting complexity and element operation complexity are low.

In a possible design, the target direction is a transmission direction of linearly polarized light output by one of the N monochromatic light sources.

In this solution, the target direction is set to a transmission direction of linearly polarized light emitted by one of monochromatic light sources, and then a transmission direction of linearly polarized light emitted by another monochromatic light source is adjusted by using the direction as a reference, so that operation convenience of system setting can be improved.

In a possible design, the optical transmitter module includes a first optical splitting module, a direction adjustment module, a second optical splitting module, and a polarization adjustment module. The first optical splitting module is configured to receive the first polarized light, and split the first polarized light into first linearly polarized light along a first direction and second linearly polarized light along a second direction. The direction adjustment module is configured to receive the second linearly polarized light, and adjust the transmission direction of the second linearly polarized light to a third direction. The second optical splitting module is configured to receive the first linearly polarized light from the first optical splitting module and the second linearly polarized light from the direction adjustment module, and generate interference light obtained by interfering the first linearly polarized light and the second linearly polarized light. The polarization adjustment module is configured to receive the interference light, and adjust a polarization type of the interference light to a circular polarization type, to obtain the second polarized light.

In this solution, the optical transmitter module splits, through the first optical splitting module, the first polarized light from the light source module into two beams of polarized light, and the two beams of polarized light are then converged on the second optical splitting module. After interference, an interference stripe may be obtained. Therefore, the interference light can be used to cast a grating stripe. The direction adjustment module can adjust an angle between the two beams of polarized light, to adjust a shape feature of the grating stripe cast by the interference light. The polarization adjustment module can make the grating stripe cast by the polarized light appear by adjusting the polarization type of the polarized light. By cooperation between modules, the optical transmitter module can output the second polarized light that can cast a multi-frequency stripe.

In a possible design, the direction adjustment module includes a first reflector and a second reflector. The first reflector is configured to receive the second linearly polarized light from the first optical splitting module, and reflect the received second linearly polarized light to the second reflector. The second reflector is configured to reflect the received second linearly polarized light, so that after being reflected, the second linearly polarized light is incident to the second optical splitting module along the third direction.

In this solution, the direction adjustment module can conveniently and quickly adjust the transmission direction of the linearly polarized light by cooperation between the two reflectors, and system setting complexity and element operation complexity are low.

In a possible design, the second direction is perpendicular to the first direction.

In a possible design, the first optical splitting module and the second optical splitting module include a polarizing beam splitter.

In this solution, the polarizing beam splitter is an optical element used to separate horizontal polarization and vertical polarization of light, and may also combine horizontally polarized light and vertically polarized light. Therefore, by cooperation of two polarizing beam splitters, the first polarized light can be conveniently and efficiently split and subsequently combined, to implement interference of polarized light.

In a possible design, the optical transmitter module further includes a projection module, and the projection module is configured to receive the second polarized light, and cast the second polarized light to the target object.

In this solution, the optical system may be configured to perform profile detection on the target object. After generating the second polarized light, the optical system may cast, to the target object through the projection module, a multi-frequency grating stripe cast by the second polarized light, to perform a subsequent detection procedure.

In a possible design, the optical adjustment module includes a quarter-wave plate, and is located between the second optical splitting module and the projection module.

In this solution, the quarter-wave plate is used by the optical adjustment module disposed between the second optical splitting module and the projection module, so that a polarization type of linearly polarized light emitted by the optical transmitter module can be conveniently and quickly adjusted, and system setting complexity and element operation complexity are low.

According to a second aspect, this application provides an apparatus, where the apparatus includes the optical system according to any one of the first aspect or the possible designs of the first aspect.

**BRIEF DESCRIPTION OF DRAWINGS**

FIG. 1 is a schematic diagram of a structured light system based on a phase measuring profilometry according to this application;
FIG. 2 is a schematic diagram of an optical system according to this application;
FIG. 3 is a schematic diagram of a light source module according to this application;
FIG. 4 is a schematic composition diagram of a light source module according to this application;
FIG. 5 is a schematic diagram of an optical transmitter module according to this application;
FIG. 6 is a schematic diagram of an optical detection module according to this application;
FIG. 7 is a schematic diagram of a structure of a color polarization detection module according to this application;
FIG. 8 is a schematic diagram of a polarization array and a pixel array according to this application;
FIG. 9 is a schematic diagram of a target grating stripe image according to this application; and
FIG. 10A and FIG. 10B are a schematic composition diagram of a possible optical system according to this application.

**DESCRIPTION OF EMBODIMENTS**

To make objectives, technical solutions, and advantages of embodiments of this application clearer, the following further describes the embodiments of this application in detail with reference to accompanying drawings. The terms "first" and "second" below in descriptions of the embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

It should be understood that, in the embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. "At least one of the following pieces (items)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

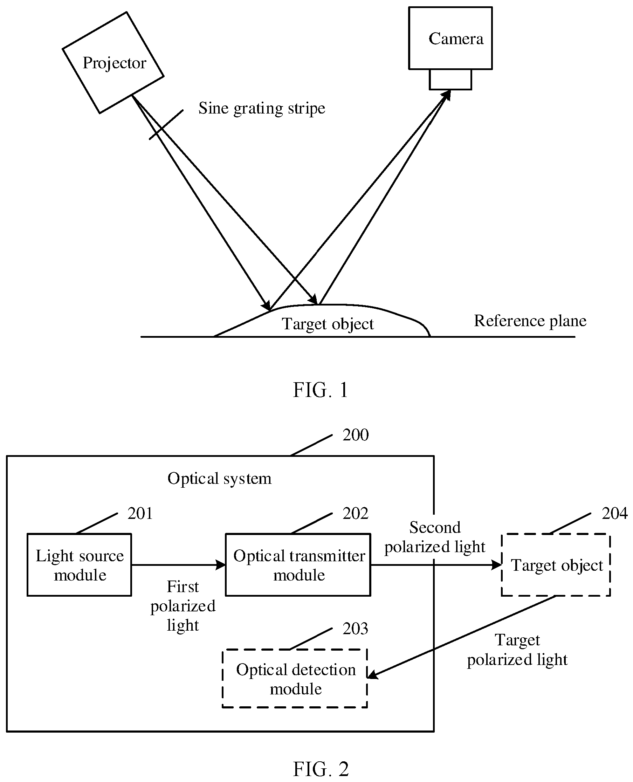

FIG. 1 is a schematic diagram of a structured light system based on a phase measuring profilometry. As shown in FIG. 1, in a current structured light measurement technology, a main principle of a measurement method based on the phase measuring profilometry is that a projector casts a sine grating stripe to a target object, and the sine grating stripe is deformed after being cast to the target object and being modulated by the target object. A camera photographs an image of the deformed grating stripe, so that three-dimensional profile information of the target object can be calculated from the image of the deformed grating stripe.

Implementation of the phase measuring profilometry mainly includes two steps: phase extraction based on phase shifting and phase unwrapping based on a multi-frequency stripe. In the step of phase extraction based on phase shifting, grating stripes with different initial phases need to be respectively cast to the target object. In the step of phase unwrapping based on a multi-frequency stripe, grating stripes with different spatial frequencies need to be respectively cast to the target object. The three-dimensional profile information of the target object may be calculated by obtaining corresponding deformed grating stripes obtained by modulating grating stripes by the target object in the two steps.

However, in a current structured light measurement system or measurement method, implementation of the two steps of casting grating stripes with different initial phases to the target object and respectively casting grating stripes with different spatial frequencies to the target object is time-division. Therefore, in a detection process, different types of grating stripes need to be respectively cast to the target object for a plurality of times, and collect a plurality of frames of corresponding deformed grating stripe images, to further calculate the three-dimensional profile information of the target object.

Therefore, the current structured light measurement system or measurement method has problems of, for example, a complex process, poor convenience, and low measurement efficiency.

In addition, in the foregoing method, a plurality of frames of deformed grating stripe images need to be collected in a detection process. Therefore, to ensure detection accuracy, a to-be-measured target object needs to maintain a static state. Therefore, the foregoing method cannot be applied to detection of a moving target object. For example, in an autonomous driving scenario, a requirement for imaging the moving target cannot be met.

Based on the foregoing problem, an embodiment of this application provides an optical system. The optical system can implement synchronous projection of a multi-wavelength multispatial frequency grating stripe, and can further implement detection of a multi-phase grating stripe based on polarization synchronization phase shifting.

The optical system may be applied to but is not limited to a scenario, for example, target detection and structured light measurement. In this embodiment of this application, the optical system may be applied to a field, for example, autonomous driving, assisted driving, and security monitoring. For example, the optical system may be disposed on a vehicle, and is configured to detect a target (for example, a pedestrian, another vehicle, or an obstacle) around the vehicle. For another example, the optical system may be disposed inside a vehicle, and is configured to implement a function, for example, target detection and recognition, and vehicle inside monitoring. In this embodiment of this application, the optical system may be further applied to various terminals, for example, a terminal, a robot, an uncrewed aerial vehicle, and an in-vehicle terminal.

It should be noted that the foregoing scenarios are merely examples of scenarios to which the optical system provided in this embodiment of this application may be applied, and do not constitute a limitation on an application scenario of the optical system.

The following describes an optical system provided in this embodiment of this application with reference to the accompanying drawings.

FIG. 2 is a schematic diagram of an optical system according to an embodiment of this application. As shown in FIG. 2, the optical system 200 includes at least a light source module 201 and an optical transmitter module 202.

The light source module 201 is configured to output first polarized light, where the first polarized light includes linearly polarized light of N colors, linearly polarized light of different colors has a same polarization angle and different transmission directions, and N is an integer greater than 1. The optical transmitter module 202 is configured to receive the first polarized light, and generate second polarized light based on the first polarized light, where the second polarized light is used to cast grating stripes of the N colors, and grating stripes of different colors have different spatial frequencies.

In some embodiments of this application, the optical system 200 may further include an optical detection module 203. The optical detection module 203 is configured to receive target polarized light corresponding to the second polarized light, and obtain a plurality of target grating stripe images based on the target polarized light, where the plurality of target grating stripe images include a plurality of target grating stripe images corresponding to each of the N colors, and initial phases of grating stripes in at least two target grating stripe images corresponding to each color are different.

In some embodiments of this application, the target polarized light may be polarized light obtained by modulating the second polarized light by the target object. Specifically, as shown in FIG. 2, after generating the second polarized light, the optical transmitter module 202 may cast the second polarized light to a target object 204, and the second polarized light is modulated by the target object 204 to obtain the target polarized light. The optical detection module 203 receives the target polarized light from the target object 204, and obtains the plurality of target grating stripe images based on the target polarized light.

That the second polarized light is modulated by the target object 204 to obtain the target polarized light may be understood as follows: The grating stripes of the N colors that are cast by the second polarized light deform after being modulated by the target object 204, to obtain target grating stripes of the N colors, where the target grating stripes of the N colors are cast by the target polarized light.

In the foregoing optical system 200, the light source module 201 cooperates with the optical transmitter module 202, so that the optical transmitter module 202 can output the second polarized light that is used to cast a multi-frequency grating stripe (a grating stripe with a plurality of spatial frequencies), and the optical detection module 203 receives the target polarized light corresponding to the second polarized light, and obtains the plurality of target grating stripe images based on the target polarized light. In one aspect, the plurality of target grating stripe images include the grating stripe images of the N colors, and spatial frequencies of grating stripes of different colors are different. Therefore, a multi-frequency grating stripe image can be obtained. In another aspect, in grating stripe images corresponding to each color, grating stripe images with different initial phases of grating stripes exist. Therefore, a multi-phase grating stripe (grating stripe with a plurality of initial phases) image may be obtained. In this way, in the optical system 200, grating stripes with different spatial frequencies can be simultaneously cast through one time of polarized light transmission, and the multi-frequency grating stripe image and the multi-phase grating stripe image with different spatial frequencies can be simultaneously obtained through one time of corresponding polarized light receiving. This greatly reduces a quantity of times of grating stripe casting and collection, simplifies a multi-frequency multi-phase grating stripe obtaining process, and greatly improves convenience and measurement efficiency.

In addition, in the method in this application, the multi-frequency grating stripe and the multi-phase grating stripe can be simultaneously obtained through one time of a process of polarizing light casting and receiving. Therefore, the method can detect a moving target, and can ensure detection accuracy.

The following separately describes in detail the light source module 201, the optical transmitter module 202, and the optical detection module 203 in the optical system 200.

For ease of description, an example in which a value of N is 3 and the corresponding N colors are red, green, and blue is used below for description.

1. Light source module 201

The light source module 201 includes N monochromatic light sources, N angle adjustment modules, and a beam combining module. Each of the N monochromatic light sources is configured to output linearly polarized light of a corresponding color. Each of the N angle adjustment modules is configured to adjust a polarization angle of linearly polarized light from a corresponding monochromatic light source to a target angle. The beam combining module is configured to adjust transmission directions of N beams of linearly polarized light from the N angle adjustment modules to have different included angles with the target direction, to obtain the first polarized light.

The beam combining module includes N-1 beam combining elements, and a first beam combining element in the N-1 beam combining elements is configured to: transmit first linearly polarized light from a first angle adjustment module in the N angle adjustment modules, reflect second linearly polarized light from a second angle adjustment module in the N angle adjustment modules, and control transmission directions of the first linearly polarized light and the second linearly polarized light to have different included angles with the target direction; or the first beam combining element is configured to: transmit third linearly polarized light from a second beam combining element, reflect fourth linearly polarized light from a third angle adjustment module of the N angle adjustment modules, and control transmission directions of the third linearly polarized light and the fourth linearly polarized light to have different included angles with the target direction.

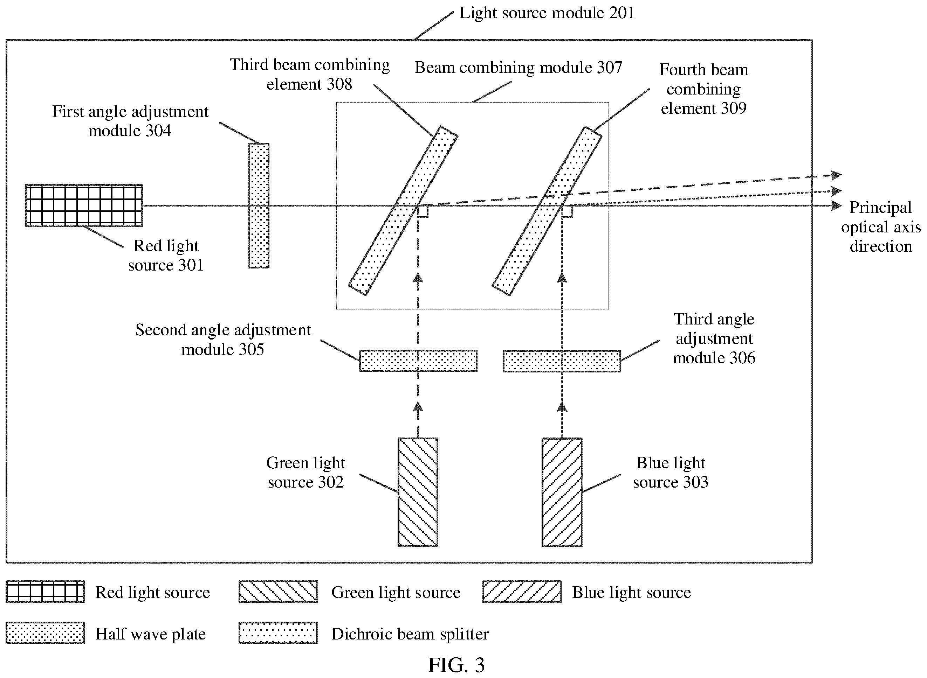

FIG. 3 is a schematic diagram of a light source module according to an embodiment of this application.

For example, as shown in FIG. 3, the light source module 201 includes three monochromatic light sources and three angle adjustment modules that are in a one-to-one correspondence with the three monochromatic light sources. The three monochromatic light sources are a red light source 301, a green light source 302, and a blue light source 303, and the three angle adjustment modules are a first angle adjustment module 304 corresponding to the red light source, a second angle adjustment module 305 corresponding to the green light source, and a third angle adjustment module 306 corresponding to the blue light source. The light source module 201 further includes a beam combining module 307.

For example, as shown in FIG. 3, a direction of a principal optical axis may be set as a reference direction.

In some embodiments of this application, the first angle adjustment module 304, the second angle adjustment module 305, and the third angle adjustment module 306 each include a half wave plate (half-wave plate). In an optional implementation, the first angle adjustment module 304, the second angle adjustment module 305, and the third angle adjustment module 306 may be the half wave plates shown in FIG. 3.

In some embodiments of this application, the first angle adjustment module 304 is located between the red light source 301 and the beam combining module 307, the second angle adjustment module 305 is located between the green light source 302 and the beam combining module 307, and the third angle adjustment module 306 is located between the blue light source 303 and the beam combining module 307.

When the angle adjustment module is the half wave plate, after red linearly polarized light emitted by the red light source 301 passes through the first angle adjustment module 304, a polarization angle of the red linearly polarized light is adjusted to a target angle. When a position of the half wave plate has a different included angle with a transmission direction of the red linearly polarized light, an adjustment amount of the polarization angle of the red linearly polarized light is different. The target angle may be a set angle. Similarly, after green linearly polarized light emitted by the green light source 302 passes through the second angle adjustment module 305, a polarization angle of the green linearly polarized light is adjusted to the target angle, and after blue linearly polarized light emitted by the blue light source 303 passes through the third angle adjustment module 306, a polarization angle of the blue linearly polarized light is adjusted to the target angle.

In some embodiments of this application, the beam combining module 307 includes two beam combining elements: a third beam combining element 308 and a fourth beam combining element 309.

Optionally, the third beam combining element 308 and the fourth beam combining element 309 each include a dichroic beam splitter. In an optional implementation, the third beam combining element 308 and the fourth beam combining element 309 may be the dichroic beam splitters shown in FIG. 3.

When a beam combining element is a dichroic beam splitter, the third beam combining element 308 transmits the red linearly polarized light from the first angle adjustment module 304, reflects the green linearly polarized light from the second angle adjustment module 305, and controls transmission directions of the two beams of linearly polarized light to have different included angles with the target direction. The fourth beam combining element 309 transmits linearly polarized light from the third beam combining element 308, reflects the blue linearly polarized light from the third angle adjustment module 306, and controls transmission directions of the two beams of linearly polarized light to have different included angles with the target direction. The linearly polarized light received by the fourth beam combining element 309 from the third beam combining element 308 includes the red linearly polarized light and the green linearly polarized light.

A transmission direction of linearly polarized light may be calibrated based on an included angle between a light direction of the linearly polarized light and the principal optical axis. That different linearly polarized light has different transmission directions may be understood as: Included angles between light of different linearly polarized light and the principal optical axis are different. When a position of the dichroic beam splitter has a different included angle with the principal optical axis, an adjustment amount of a transmission direction of incident linearly polarized light is different. Therefore, transmission directions of linearly polarized light of different colors may be controlled by adjusting the position of the dichroic beam splitter.

For example, as shown in FIG. 3, polarized light emitted by the fourth beam combining element 309 is first polarized light output by the light source module 201. In the first polarized light, transmission directions of linearly polarized light of the three colors are different. It may be understood as that light directions of the linearly polarized light of the three colors have different included angles with the principal optical axis direction, or it may be understood as that there is an included angle between light directions of linearly polarized light of any two of the three colors, a size of the included angle may be greater than zero and less than a set threshold, and the size of the included angle may be adjusted by adjusting an included angle between the dichroic beam splitter and the principal optical axis. The first polarized light output by the light source module 201 is transmitted to the optical transmitter module 202, and is used by the optical transmitter module 202 to generate second polarized light.

In some embodiments of this application, the target direction may be the principal optical axis direction, or the target direction may be a transmission direction of linearly polarized light output by one of the three monochromatic light sources, or the target direction is the set direction.

In some embodiments of this application, in the three monochromatic light sources, a transmission direction of linearly polarized light emitted by at most one monochromatic light source coincides with the principal optical axis direction or the target direction.

The following provides two examples of a layout of elements in the light source module 201.

Example 1:

As shown in FIG. 3, the transmission direction of the red linearly polarized light emitted by the red light source 301 is the target direction, and coincides with the principal optical axis direction. The transmission direction of the green linearly polarized light emitted by the green light source 302 and the transmission direction of the blue linearly polarized light emitted by the blue light source 303 are separately perpendicular to the principal optical axis direction.

The red linearly polarized light emitted by the red light source 301 is vertically incident to the first angle adjustment module 304, and after being adjusted by the first angle adjustment module 304, the red linearly polarized light is sequentially transmitted through the beam combining element 308 and the beam combining element 309. The green linearly polarized light emitted by the green light source 302 is vertically incident to the second angle adjustment module 305, and after being adjusted by the second angle adjustment module 305, the green linearly polarized light reaches the beam combining element 308 and is reflected, is transmitted along a transmission direction different from that of the red linearly polarized light, and is transmitted through the beam combining element 309. The blue linearly polarized light emitted by the blue light source 303 is vertically incident to the third angle adjustment module 306, and after being adjusted by the third angle adjustment module 306, the blue linearly polarized light reaches the beam combining element 309 and is reflected, and is transmitted along a transmission direction different from those of the red linearly polarized light and the green linearly polarized light.

A rotation angle (an included angle between a plane of a dichroic beam splitter and the principal optical axis) of a dichroic beam splitter corresponding to the beam combining element 308 may be adjusted to control the green linearly polarized light to be transmitted in the transmission direction different from that of the red linearly polarized light after being reflected by the beam combining element 308. A rotation angle of a dichroic beam splitter corresponding to the beam combining element 309 may be adjusted to control the blue linearly polarized light to be transmitted in the transmission direction different from those of the red linearly polarized light and the green linearly polarized light after being reflected by the beam combining element 309.

Example 2:

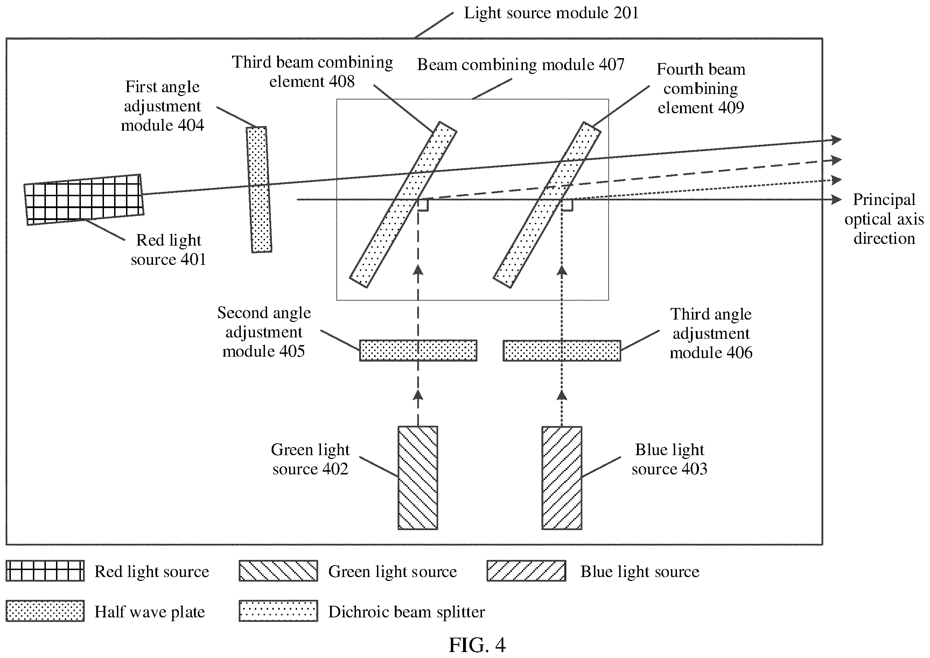

FIG. 4 is a schematic composition diagram of a light source module according to an embodiment of this application.

As shown in FIG. 4, a target direction is a principal optical axis direction, and a transmission direction of red linearly polarized light emitted by a red light source 401, a transmission direction of green linearly polarized light emitted by a green light source 402, and a transmission direction of blue linearly polarized light emitted by a blue light source 403 have different included angles with the principal optical axis direction.

The red linearly polarized light emitted by the red light source 401 is vertically incident to a first angle adjustment module 404, and after being adjusted by the first angle adjustment module 404, the red linearly polarized light is sequentially transmitted through a third beam combining element 408 and a fourth beam combining element 409. The green linearly polarized light emitted by the green light source 402 is vertically incident to a second angle adjustment module 405, and after being adjusted by the second angle adjustment module 405, the green linearly polarized light reaches a third beam combining element 408 and is reflected, is transmitted along a transmission direction different from that of the red linearly polarized light, and is transmitted through a fourth beam combining element 409. The blue linearly polarized light emitted by the blue light source 403 is vertically incident to a third angle adjustment module 406, and after being adjusted by the third angle adjustment module 406, the blue linearly polarized light reaches a fourth beam combining element 409 and is reflected, and is transmitted along a transmission direction different from those of the red linearly polarized light and the green linearly polarized light.

A rotation angle of a dichroic beam splitter corresponding to the third beam combining element 408 may be adjusted to control the green linearly polarized light to be transmitted in the transmission direction different from that of the red linearly polarized light after being reflected by the third beam combining element 408. A rotation angle of a dichroic beam splitter corresponding to the fourth beam combining element 409 may be adjusted to control the blue linearly polarized light to be transmitted in the transmission direction different from those of the red linearly polarized light and the green linearly polarized light after being reflected by the fourth beam combining element 409.

In the foregoing embodiment, the light source module 201 separately generates linearly polarized light of different colors through a plurality of monochromatic light sources, and adjusts, through angle adjustment modules corresponding to different monochromatic light sources, linearly polarized light of different colors to have a same polarization angle and different transmission directions, so that a plurality of beams of linearly polarized light having different wavelengths and a same polarization feature can be simultaneously generated, to further generate polarized light used to simultaneously cast a multi-frequency grating stripe.

2. Optical transmitter module 202

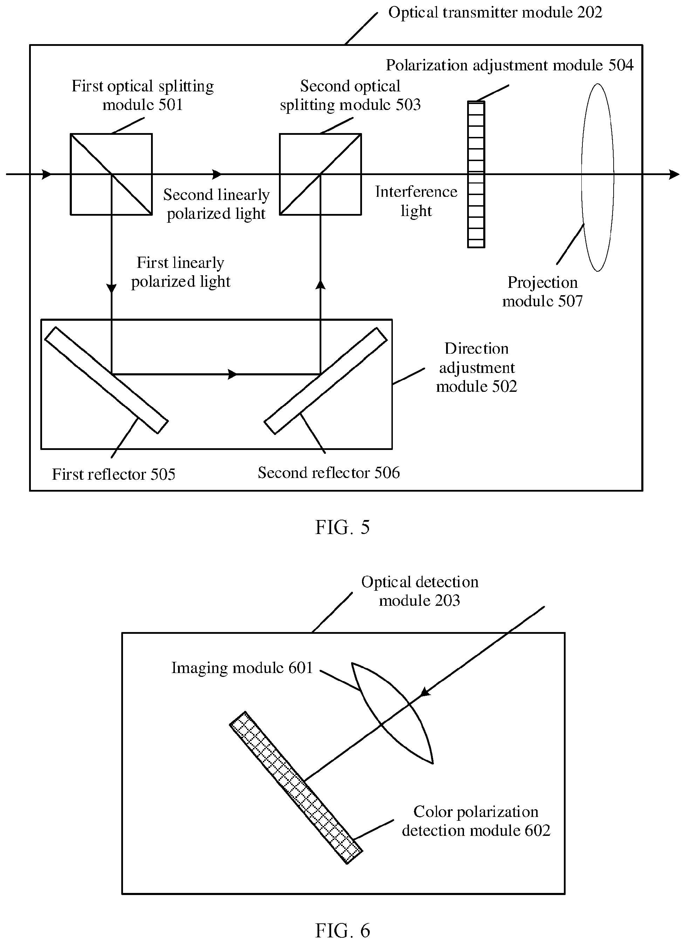

FIG. 5 is a schematic diagram of an optical transmitter module according to an embodiment of this application. As shown in FIG. 5, the optical transmitter module 202 includes a first optical splitting module 501, a direction adjustment module 502, a second optical splitting module 503, and a polarization adjustment module 504.

The first optical splitting module 501 is configured to receive the first polarized light from the light source module 201, and split the first polarized light into first linearly polarized light along a first direction and second linearly polarized light along a second direction. The direction adjustment module 502 is configured to receive the second linearly polarized light, and adjust a transmission direction of the second linearly polarized light to a third direction. The second optical splitting module 503 is configured to receive the first linearly polarized light from the first optical splitting module 501 and the second linearly polarized light from the direction adjustment module 502, and generate interference light obtained by interfering the first linearly polarized light and the second linearly polarized light. The polarization adjustment module 504 is configured to receive the interference light, and adjust a polarization type of the interference light to a circular polarization type, to obtain the second polarized light.

In some embodiments of this application, the direction adjustment module includes a first reflector 505 and a second reflector 506. The first reflector 505 is configured to receive the second linearly polarized light from the first optical splitting module, and reflect the received second linearly polarized light to the second reflector 506. The second reflector 506 is configured to reflect the received second linearly polarized light, so that after being reflected, the second linearly polarized light is incident to the second optical splitting module 503 along the third direction.

In some embodiments of this application, the first optical splitting module 501 and the second optical splitting module 503 include a polarizing beam splitter. In an optional implementation, the first optical splitting module 501 and the second optical splitting module 503 may be polarizing beam splitters. A first polarizing beam splitter corresponding to the first optical splitting module 501 and a second polarizing beam splitter corresponding to the second optical splitting module 503 are symmetrically distributed.

In some embodiments of this application, the optical transmitter module 202 further includes a projection module 507, and the projection module 507 is configured to receive the second polarized light, and cast the second polarized light to the target object. The projection module 507 includes a projection lens or another element having a projection function. In an optional implementation, the projection module 507 may be the projection lens or the another element having a projection function.

In some embodiments of this application, the polarization adjustment module 504 includes a quarter-wave plate, and is located between the second optical splitting module 503 and the projection module 507. In an optional implementation, the polarization adjustment module 504 may be the quarter-wave plate.

For example, when both the first optical splitting module 501 and the second optical splitting module 503 are the polarizing beam splitters, the first direction may be a horizontal polarization direction, and the second direction may be a vertical polarization direction, which is perpendicular to the first direction. After receiving the first polarized light from the light source module 201, the first optical splitting module 501 splits the first polarized light into transmitted light and reflected light that are perpendicular to each other, where the transmitted light is horizontally polarized light (p light) in a horizontal polarization direction, that is, the first linearly polarized light, and the reflected light is vertically polarized light (s light) in a vertical polarization direction. After being transmitted by the second beam splitter, the first linearly polarized light transmitted by the first optical splitting module 501 is incident to the polarization adjustment module 504. After being reflected by the first reflector 505, the second linearly polarized light reflected by the first optical splitting module 501 reaches the second reflector 506, is reflected by the second reflector 506, and then is incident to the polarization adjustment module 504 after being reflected by the second optical splitting module 503. The first linearly polarized light and the second linearly polarized light are interfered, and after the obtained interference light passes through the polarization adjustment module, the polarization type of the interference light changes to circularly polarized light, to obtain the second polarized light.

An included angle between the first linearly polarized light and the second linearly polarized light may be adjusted by adjusting a rotation angle (an included angle between a reflector plane and a horizontal or vertical direction) of the first reflector 505 and/or the second reflector 506, to control a spatial frequency of a grating stripe cast by the second linearly polarized light obtained based on the first linearly polarized light and the second linearly polarized light.

It should be noted that, for ease of description, in FIG. 5, only one line is used to represent the first polarized light. Actually, the first polarized light includes three beams of linearly polarized light that are corresponding to three colors and that are output by the light source module 201.

In a scenario in which profile detection is performed on a target object, after obtaining the second polarized light, the polarization adjustment module transmits the second polarized light to the projection module 507, and the projection module 507 projects the second polarized light onto the target object.

In the foregoing embodiment, the optical transmitter module 202 first splits the first polarized light from the light source module 201 into two different beams of polarized light, and then interferes the obtained two beams of polarized light to obtain the second polarized light, so that the second polarized light can simultaneously cast grating stripes of a plurality of spatial frequencies, to further obtain a multi-frequency grating stripe image and a multi-phase grating stripe image.

3. Optical detection module 203

FIG. 6 is a schematic diagram of an optical detection module according to an embodiment of this application. As shown in FIG. 6, the optical detection module 203 includes an imaging module 601 and a color polarization detection module 602.

The imaging module 601 is configured to receive target polarized light corresponding to a second polarized light point. The target polarized light is used to cast an initial target grating stripe of N colors, and the initial target grating stripe is a grating stripe obtained by modulating a grating stripe cast by the second polarized light. The color polarization detection module 602 is configured to separately perform phase shifting of at least two different phase values on an initial grating stripe corresponding to each color, and generate a plurality of target grating stripe images corresponding to each color.

When the optical system 200 is applied to a scenario in which profile detection is performed on a target, the target polarized light may be polarized light obtained by modulating the second polarized light by the target object.

Specifically, after the optical transmitter module 202 casts the second polarized light to the target object, the grating stripe cast by the second polarized light deforms due to modulation of the target object, and generates corresponding target polarized light. The corresponding target polarized light is reflected to the imaging module 601 in the optical detection module 203 and transmitted to the color polarization detection module 602 through the imaging module 601.

In some embodiments of this application, the imaging module 601 includes an imaging element, for example, an imaging lens. In an optional implementation, the imaging module 601 may be the imaging lens. The color polarization detection module may include a color polarization detector (or sensor) with different polarization coatings and different color coatings, or may include a color polarization camera with a multi-color light source and a pixel-level coating, or the like. In an optional implementation, the color polarization detection module may be the color polarization detector.

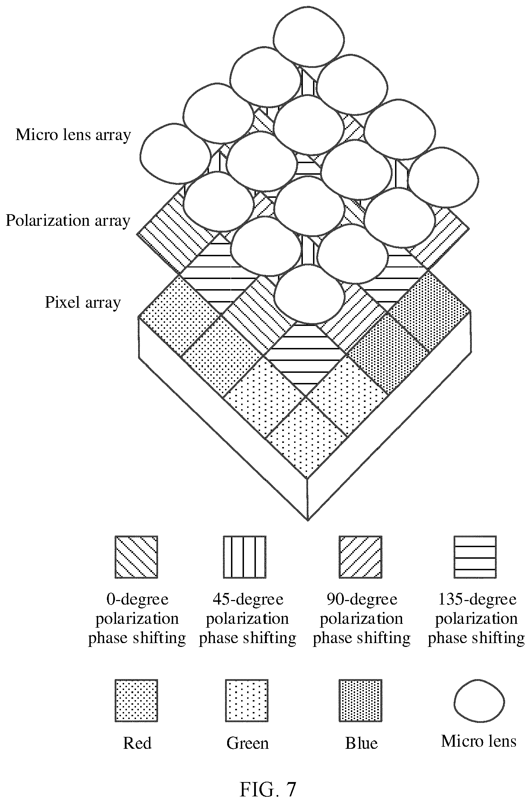

FIG. 7 is a schematic diagram of a structure of a color polarization detection module according to an embodiment of this application.

In this embodiment of this application, the color polarization detection module is configured to perform, based on polarization, different phase shifting on a grating stripe cast by the target polarized light, and receive target polarized light of different colors, to implement gating on a multi-frequency grating stripe and a multi-phase grating stripe. As shown in FIG. 7, hardware composition of the color polarization detection module 602 includes a pixel array located at a bottom layer, a polarization array located at a middle layer, and a micro lens array located at a top layer. The micro lens array is configured to transmit the target polarized light. The polarization array is configured to perform phase shifting of at least two different phase values on the target polarized light, to obtain a multi-phase grating stripe signal. The pixel array is configured to separately receive the target polarized light of different colors, to obtain a multi-frequency grating stripe signal. After obtaining the multi-phase grating stripe signal and the multi-frequency grating stripe signal, the color polarization detection module 602 correspondingly generates a multi-frequency grating stripe image and multi-phase grating stripe image, to obtain a plurality of target grating stripe images.

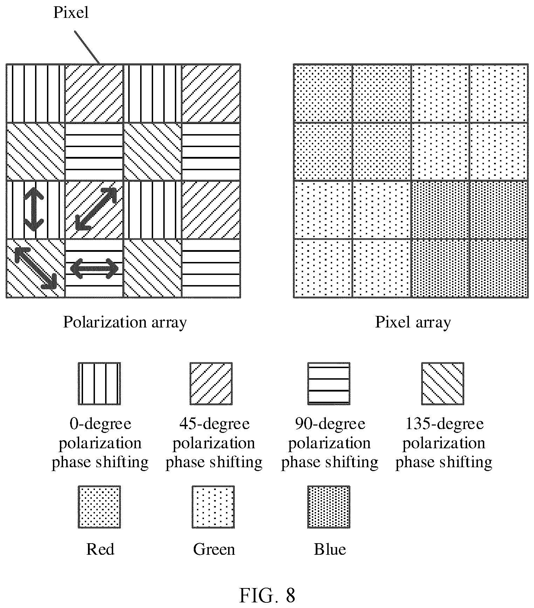

FIG. 8 is a schematic diagram of a polarization array and a pixel array according to an embodiment of this application.

An example in which phase shifting of four different phase values is performed on the target polarized light is used for description below.

As shown in FIG. 8, a minimum processing unit of the polarization array is in a unit of pixel. In the polarization array, each pixel unit corresponds to a phase shifting of one phase value, and phase shifting of the phase value corresponding to the pixel unit is performed on target polarized light cast to the pixel unit. When phase shifting of the four different phase values is performed on the target polarized light, the polarization array includes phase shifting of the four different phase values, that is, includes pixel units of four different polarization directions, and four adjacent pixel units that respectively correspond to phase shifting of the four phase values are used as one group, where phase values corresponding to the four adjacent pixel units may be 0°, 45°, 90°, and 135°.

As shown in FIG. 8, in the pixel array, four pixel units corresponding to the group of the four pixel units in the polarization array correspond to a coating of a same color, and are configured to filter out an optical signal of another color from a received target polarized light, and receive only an optical signal of a color corresponding to the pixel unit.

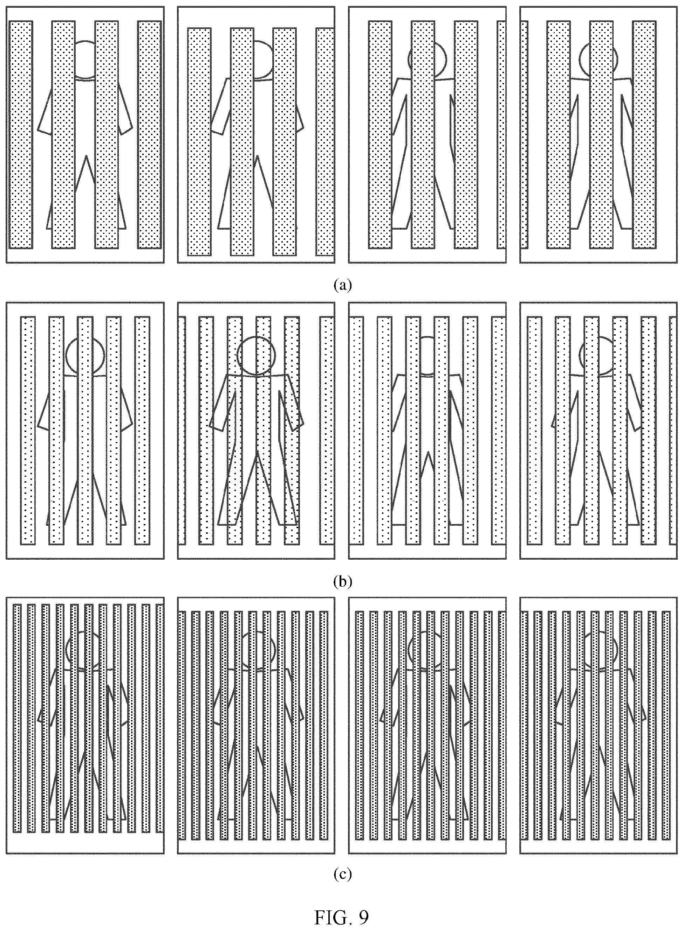

FIG. 9 is a schematic diagram of a target grating stripe image according to an embodiment of this application. In a scenario in which a grating stripe is cast by using red, green, and blue polarized light, and phase shifting of four different phase values is performed on a target polarized light, the optical detection module 203 may obtain 12 different target grating stripe images based on the target polarized light. As shown in FIG. 9, the obtained 12 target grating stripe images include four red grating stripe images shown in (a) in FIG. 9, four green grating stripe images shown in (b) in FIG. 9, and four blue grating stripe images shown in (c) in FIG. 9. In the four red grating stripe images shown in (a), an initial phase of a grating stripe is different. This is the same in (b) and (c). In FIG. 9, an example in which a person is used as a target object is used for illustration.

In the foregoing manner, the color polarization detection module 602 may selectively receive, through the polarization array based on target polarized light received at a time, a grating stripe obtained by performing phase shifting on a grating stripe with a same spatial frequency, and selectively receive grating stripes of different colors, to obtain a multi-frequency grating stripe image and a multi-phase grating stripe image simultaneously. This greatly reduces a quantity of times of grating stripe casting and collection, simplifies a multi-frequency multi-phase grating stripe obtaining process, and greatly improves convenience and measurement efficiency.

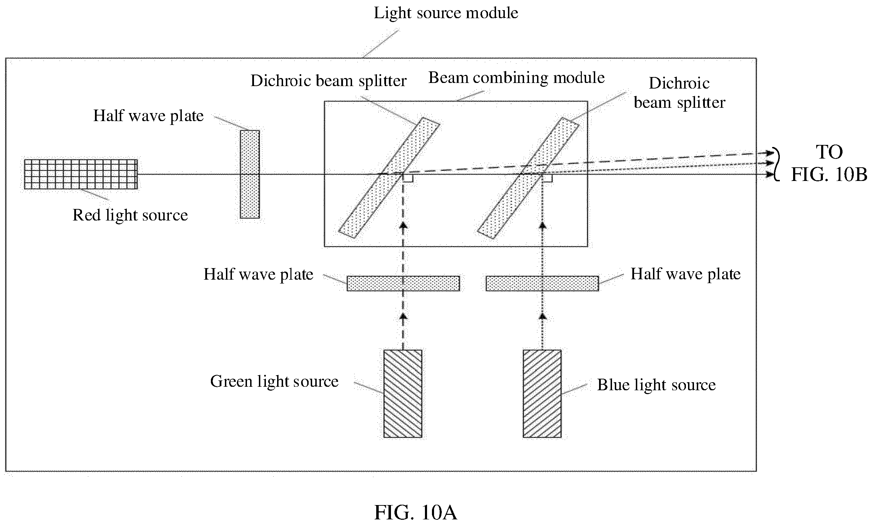

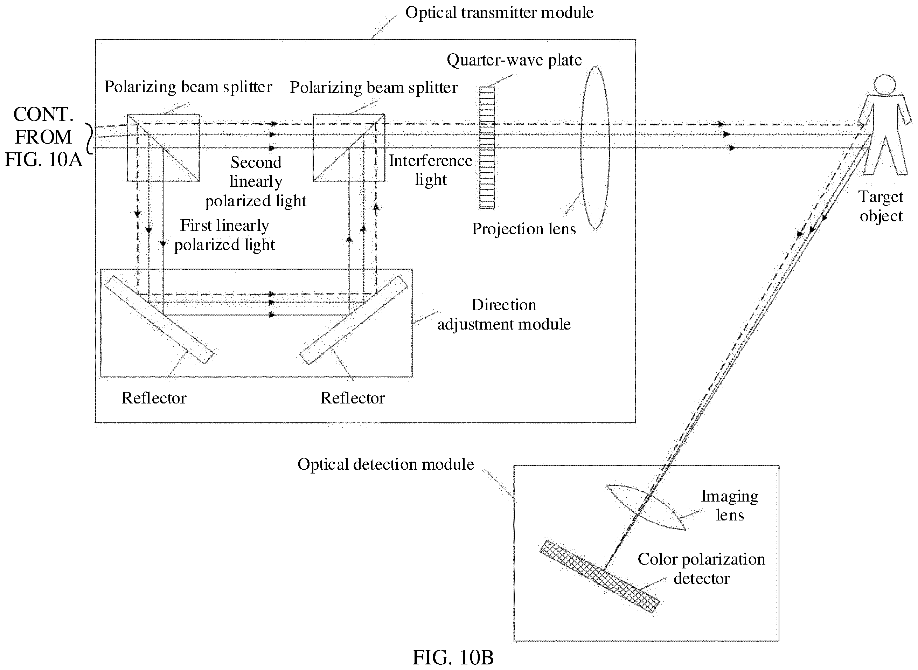

FIG. 10A and FIG. 10B are a schematic composition diagram of a possible optical system according to an embodiment of this application. As shown in FIG. 10A and FIG. 10B, for modules and elements included in the optical system, refer to the descriptions in the foregoing embodiments. Details are not described herein again.

It may be understood that the optical system architecture shown in FIG. 10A and FIG. 10B is merely a possible implementation of the optical system 200 provided in this embodiment of this application, and does not constitute a limitation on the optical system provided in this embodiment of this application.

When the optical system 200 is applied to a scenario in which profile detection is performed on a target object, after obtaining a plurality of grating stripe images obtained by modulating by the target object, the optical detection module 203 may calculate profile information of the target object based on the plurality of grating stripe images.

Based on a detection result shown in FIG. 9, the optical detection module 203 may use a four-step phase shifting method, separately use the four grating stripe images in the schematic diagrams (a), (b), and (c) in FIG. 9 as a group to calculate a phase diagram corresponding to each group, obtain a phase value by calculation based on phase diagrams corresponding to three groups of grating stripe images, and finally perform profile detection on the target object based on the determined phase value.

A light intensity formula of the four-step phase shifting method is as follows:

$$I(x,y,\delta_j) = A(x,y) + B(x,y)\cos\left[\varphi(x,y) + \delta_j\right]$$

$I(x,y,\delta_j)$ is a light intensity function, $A(x,y)$ is a background light intensity, $B(x,y)$ is a modulation depth of a stripe, $\delta_j$ is a moving phase value, $\varphi(x,y)$ is a phase of a measured object, and represents height information of the measured object.

In a standard four-step phase shifting method, a wrapping phase of a grating stripe image is calculated, and corresponding phase shifts of four images are respectively $\delta_0=0$, $\delta_1=\pi/2$, $\delta_2=\pi$, $\delta_3=3\pi/2$.

A four-step phase shifting formula can be obtained by solving the foregoing formula:

$$\begin{cases} I_0(x,y) = A(x,y) + B(x,y)\cos\varphi(x,y) \\ I_1(x,y) = A(x,y) - B(x,y)\sin\varphi(x,y) \\ I_2(x,y) = A(x,y) - B(x,y)\cos\varphi(x,y) \\ I_3(x,y) = A(x,y) + B(x,y)\sin\varphi(x,y) \end{cases}$$

$I_0 (x,y)$, $I_1 (x,y)$, $I_2(x,y)$, and $I_3(x,y)$ are light intensity of four grating stripe images respectively.

The following phase function may be obtained by solving the foregoing four formulas in combination:

$$\varphi(x,y)=\arctan\left(I_3(x,y)-I_1(x,y)\right)/\left(I_0(x,y)-I_2(x,y)\right) \quad -\pi\leq\varphi\leq\pi$$

$\varphi(x,y)$ is the calculated wrapping phase.

After the optical detection module 203 calculates a (wrapping) phase corresponding to each group of grating stripe images by using the foregoing method, phase de-entanglement may be implemented by using a method of calculating a combined wavelength in a phase de-entanglement step.

In a scenario in which phase shifting of three different phase values is performed on the target polarized light, the pixel array shown in FIG. 8 includes phase shifting of the three different phase values, that is, includes three pixel units of different polarization directions, and three adjacent pixel units that respectively correspond to phase shifting of the three phase values are used as one group. In this manner, a calculation method related to three-step phase shifting may be used to perform profile detection on the target object. Details are not described herein again.

Based on a same technical concept, an embodiment of this application further provides an apparatus. The apparatus may include the optical system provided in the embodiments of this application.

Based on a same technical concept, this application further provides a terminal. The terminal may include the optical system provided in the embodiments of this application.

Optionally, the terminal may be a vehicle, an uncrewed aerial vehicle, a robot, an in-vehicle terminal, or the like.

It is clear that, a person skilled in the art can make various modifications and variations to this application without departing from the scope of this application. In this case, this application is intended to cover these modifications and variations of the embodiments of this application provided that they fall within the scope of protection defined by the following claims.

**Claims**

1. An optical system (200), comprising a light source module (201) and an optical transmitter module (202), wherein

   the light source module (201) is configured to output first polarized light, wherein the first polarized light comprises linearly polarized light of N colors, linearly polarized light of different colors has a same polarization angle and different transmission directions, and N is an integer greater than 1; and
   the optical transmitter module (202) is configured to receive the first polarized light, and generate second polarized light based on the first polarized light, wherein the second polarized light is used to cast grating stripes of the N colors, and grating stripes of different colors have different spatial frequencies,
   wherein the light source module (201) comprises N monochromatic light sources, N angle adjustment modules, and a beam combining module, wherein
   each of the N monochromatic light sources is configured to output linearly polarized light of a corresponding color;
   each of the N angle adjustment modules is configured to adjust a polarization angle of linearly polarized light from a corresponding monochromatic light source to a target angle; and
   the beam combining module is configured to adjust transmission directions of N beams of linearly polarized light from the N angle adjustment modules to have different included angles with a target direction, to obtain the first polarized light.

2. The optical system according to claim 1, wherein the optical system (200) further comprises an optical detection module (203); and
   the optical detection module (203) is configured to receive target polarized light corresponding to the second polarized light, and obtain a plurality of target grating stripe images based on the target polarized light, wherein the plurality of target grating stripe images comprise a plurality of target grating stripe images corresponding to each of the N colors, and initial phases of grating stripes in at least two target grating stripes images corresponding to each color are different.

3. The optical system according to claim 2, wherein the optical detection module (203) comprises an imaging module (601) and a color polarization detection module (602);

   the imaging module (601) is configured to receive the target polarized light, wherein the target polarized light is used to cast initial target grating stripes of the N colors, and the initial target grating stripe is a grating stripe obtained by modulating a grating stripe cast by the second polarized light; and

the color polarization detection module (602) is configured to separately perform phase shifting of at least two different phase values on an initial grating stripe corresponding to each color, and generate the plurality of target grating stripe images corresponding to each color.

4. The optical system according to any one of claims 1 to 3, wherein the angle adjustment module comprises a half wave plate, and the angle adjustment module is located between the corresponding monochromatic light source and the beam combining module.

5. The optical system according to any one of claims 1 to 4, wherein the beam combining module comprises N-1 beam combining elements, wherein

a first beam combining element in the N-1 beam combining elements is configured to: transmit first linearly polarized light from a first angle adjustment module in the N angle adjustment modules, reflect second linearly polarized light from a second angle adjustment module in the N angle adjustment modules, and control transmission directions of the first linearly polarized light and the second linearly polarized light to have different included angles with the target direction; or

the first beam combining element is configured to: transmit third linearly polarized light from a second beam combining element, reflect fourth linearly polarized light from a third angle adjustment module in the N angle adjustment modules, and control transmission directions of the third linearly polarized light and the fourth linearly polarized light to have different included angles with the target direction.

6. The optical system according to claim 5, wherein any one of the beam combining elements comprises a dichroic beam splitter.

7. The optical system according to any one of claims 1 to 6, wherein the target direction is a transmission direction of linearly polarized light output by one of the N monochromatic light sources.

8. The optical system according to any one of claims 1 to 7, wherein the optical transmitter module (202) comprises a first optical splitting module, a direction adjustment module, a second optical splitting module, and a polarization adjustment module, wherein

the first optical splitting module is configured to receive the first polarized light, and split the first polarized light into first linearly polarized light along a first direction and second linearly polarized light along a second direction;

the direction adjustment module is configured to receive the second linearly polarized light, and adjust the transmission direction of the second linearly polarized light to a third direction;

the second optical splitting module is configured to receive the first linearly polarized light from the first optical splitting module and the second linearly polarized light from the direction adjustment module, and generate interference light obtained by interfering the first linearly polarized light and the second linearly polarized light; and

the polarization adjustment module is configured to receive the interference light, and adjust a polarization type of the interference light to a circular polarization type, to obtain the second polarized light.

9. The optical system according to claim 8, wherein the direction adjustment module comprises a first reflector and a second reflector;

the first reflector is configured to receive the second linearly polarized light from the first optical splitting module, and reflect the received second linearly polarized light to the second reflector; and

the second reflector is configured to reflect the received second linearly polarized light, so that after being reflected, the second linearly polarized light is incident to the second optical splitting module along the third direction.

10. The optical system according to claim 8 or 9, wherein the second direction is perpendicular to the first direction.

11. The optical system according to any one of claims 8 to 10, wherein the first optical splitting module and the second optical splitting module comprise a polarizing beam splitter.

12. The optical system according to any one of claims 8 to 11, wherein the optical transmitter module (202) further comprises a projection module, and the projection module is configured to receive the second polarized light, and cast the second polarized light to a target object.

13. The optical system according to claim 12, wherein the polarization adjustment module comprises a quarter-wave plate, and is located between the second optical splitting module and the projection module.

14. An apparatus, wherein the apparatus comprises the optical system according to any one of claims 1 to 13.

**Patentansprüche**

1. Optisches System (200), umfassend ein Lichtquellenmodul (201) und ein optisches Sendermodul (202), wobei

   das Lichtquellenmodul (201) dafür ausgelegt ist, erstes polarisiertes Licht auszugeben, wobei das erste polarisierte Licht linear polarisiertes Licht von N Farben umfasst, linear polarisiertes Licht verschiedener Farben einen gleichen Polarisationswinkel und verschiedene Übertragungsrichtungen hat und N eine ganze Zahl größer als 1 ist; und
   das optische Sendermodul (202) dafür ausgelegt ist, das erste polarisierte Licht zu empfangen und zweites polarisiertes Licht auf der Grundlage des ersten polarisierten Lichts zu erzeugen, wobei das zweite polarisierte Licht verwendet wird, um Gitterstreifen der N Farben zu projizieren, und Gitterstreifen verschiedener Farben verschiedene Raumfrequenzen haben,
   wobei das Lichtquellenmodul (201) N monochromatische Lichtquellen, N Winkeleinstellmodule und ein Strahlkombinationsmodul umfasst, wobei
   jede der N monochromatischen Lichtquellen dafür ausgelegt ist, linear polarisiertes Licht einer entsprechenden Farbe auszugeben;
   jedes der N Winkeleinstellmodule dafür ausgelegt ist, einen Polarisationswinkel von linear polarisiertem Licht von einer entsprechenden monochromatischen Lichtquelle auf einen Zielwinkel einzustellen; und
   das Strahlkombinationsmodul dafür ausgelegt ist, Übertragungsrichtungen von N Strahlen aus linear polarisiertem Licht von den N Winkeleinstellmodulen so einzustellen, dass sie unterschiedliche Winkel mit einer Zielrichtung einschließen, zu dem Zweck, das erste polarisierte Licht zu erhalten.

2. Optisches System nach Anspruch 1, wobei das optische System (200) ferner ein optisches Erfassungsmodul (203) umfasst; und
   das optische Erfassungsmodul (203) dafür ausgelegt ist, polarisiertes Ziellicht zu empfangen, das dem zweiten polarisierten Licht entspricht, und eine Vielzahl von Zielgitterstreifenbildern auf der Grundlage des polarisierten Ziellichts zu erhalten, wobei die Vielzahl von Zielgitterstreifenbildern eine Vielzahl von Zielgitterstreifenbildern umfasst, die den jeweiligen N Farben entsprechen, und Anfangsphasen von Gitterstreifen in mindestens zwei Zielgitterstreifenbildern, die der jeweiligen Farbe entsprechen, unterschiedlich sind.

3. Optisches System nach Anspruch 2, wobei das optische Erfassungsmodul (203) ein Abbildungsmodul (601) und ein Farbpolarisationserfassungsmodul (602) umfasst;

   das Abbildungsmodul (601) dafür ausgelegt ist, das polarisierte Ziellicht zu empfangen, wobei das polarisierte Ziellicht verwendet wird, um anfängliche Zielgitterstreifen der N Farben zu projizieren, und der anfängliche Zielgitterstreifen ein Gitterstreifen ist, der durch Modulation eines durch das zweite polarisierte Licht projizierten Gitterstreifens erhalten wird; und
   das Farbpolarisationserfassungsmodul (602) dafür ausgelegt ist, separat Phasenverschiebung von mindestens zwei verschiedenen Phasenwerten auf einem Ausgangsgitterstreifen entsprechend jeder Farbe durchzuführen und die Vielzahl von Zielgitterstreifenbildern entsprechend jeder Farbe zu erzeugen.

4. Optisches System nach einem der Ansprüche 1 bis 3, wobei das Winkeleinstellmodul eine Halbwellenplatte umfasst und das Winkeleinstellmodul zwischen der entsprechenden monochromatischen Lichtquelle und dem Strahlkombinationsmodul angeordnet ist.

5. Optisches System nach einem der Ansprüche 1 bis 4, wobei das Strahlkombinationsmodul N-1 Strahlkombinationselemente umfasst, wobei

   ein erstes Strahlkombinationselement in den N-1 Strahlkombinationselementen für folgende Vorgänge ausgelegt ist: Übertragen von erstem linear polarisiertem Licht von einem ersten Winkeleinstellmodul in den N Winkeleinstellmodulen, Reflektieren von zweitem linear polarisiertem Licht von einem zweiten Winkeleinstellmodul in den N Winkeleinstellmodulen und Steuern von Übertragungsrichtungen des ersten linear polarisierten Lichts und des zweiten linear polarisierten Lichts auf eine Weise, dass sie unterschiedliche Winkel mit der Zielrichtung einschließen; oder

das erste Strahlkombinationselement für folgende Vorgänge ausgelegt ist: Übertragen von drittem linear polarisiertem Licht von einem zweiten Strahlkombinationselement, Reflektieren von viertem linear polarisiertem Licht von einem dritten Winkeleinstellmodul in den N Winkeleinstellmodulen und Steuern von Übertragungsrichtungen des dritten linear polarisierten Lichts und des vierten linear polarisierten Lichts auf eine Weise, dass sie unterschiedliche Winkel mit der Zielrichtung einschließen.

6. Optisches System nach Anspruch 5, wobei ein beliebiges der Strahlkombinationselemente einen dichroitischen Strahlteiler umfasst.

7. Optisches System nach einem der Ansprüche 1 bis 6, wobei die Zielrichtung eine Übertragungsrichtung von linear polarisiertem Licht ist, das von einer der N monochromatischen Lichtquellen ausgegeben wird.

8. Optisches System nach einem der Ansprüche 1 bis 7, wobei das optische Sendermodul (202) ein erstes optisches Aufteilungsmodul, ein Richtungseinstellmodul, ein zweites optisches Aufteilungsmodul und ein Polarisationseinstellmodul umfasst, wobei

das erste optische Aufteilungsmodul dafür ausgelegt ist, das erste polarisierte Licht zu empfangen und das erste polarisierte Licht in erstes linear polarisiertes Licht entlang einer ersten Richtung und zweites linear polarisiertes Licht entlang einer zweiten Richtung aufzuteilen;
das Richtungseinstellmodul dafür ausgelegt ist, das zweite linear polarisierte Licht zu empfangen und die Übertragungsrichtung des zweiten linear polarisierten Lichts auf eine dritte Richtung einzustellen;
das zweite optische Aufteilungsmodul dafür ausgelegt ist, das erste linear polarisierte Licht vom ersten optischen Aufteilungsmodul und das zweite linear polarisierte Licht vom Richtungseinstellmodul zu empfangen und Interferenzlicht zu erzeugen, das durch Interferieren des ersten linear polarisierten Lichts und des zweiten linear polarisierten Lichts erhalten wird; und
das Polarisationseinstellmodul dafür ausgelegt ist, das Interferenzlicht zu empfangen und eine Polarisationsart des Interferenzlichts auf eine Zirkularpolarisationsart einzustellen, zu dem Zweck, das zweite polarisierte Licht zu erhalten.

9. Optisches System nach Anspruch 8, wobei das Richtungseinstellmodul einen ersten Reflektor und einen zweiten Reflektor umfasst;

der erste Reflektor dafür ausgelegt ist, das zweite linear polarisierte Licht vom ersten optischen Aufteilungsmodul zu empfangen und das empfangene zweite linear polarisierte Licht zum zweiten Reflektor zu reflektieren; und
der zweite Reflektor dafür ausgelegt ist, das empfangene zweite linear polarisierte Licht zu reflektieren, so dass das zweite linear polarisierte Licht nach der Reflexion auf das zweite optische Aufteilungsmodul entlang der dritten Richtung einfällt.

10. Optisches System nach Anspruch 8 oder 9, wobei die zweite Richtung rechtwinklig zur ersten Richtung verläuft.

11. Optisches System nach einem der Ansprüche 8 bis 10, wobei das erste optische Aufteilungsmodul und das zweite optische Aufteilungsmodul einen polarisierenden Strahlteiler umfassen.

12. Optisches System nach einem der Ansprüche 8 bis 11, wobei das optische Sendermodul (202) ferner ein Projektionsmodul umfasst und das Projektionsmodul dafür ausgelegt ist, das zweite polarisierte Licht zu empfangen und das zweite polarisierte Licht auf ein Zielobjekt zu projizieren.

13. Optisches System nach Anspruch 12, wobei das Polarisationseinstellmodul eine Viertelwellenplatte umfasst und zwischen dem zweiten optischen Aufteilungsmodul und dem Projektionsmodul angeordnet ist.

14. Vorrichtung, wobei die Vorrichtung das optische System nach einem der Ansprüche 1 bis 13 umfasst.

**Revendications**

1. Système optique (200), comprenant un module de source lumineuse (201) et un module d'émetteur optique (202), dans lequel

   le module de source lumineuse (201) est configuré pour émettre une première lumière polarisée, dans lequel la première lumière polarisée comprend une lumière polarisée de manière linéaire de N couleurs, une lumière polarisée de manière linéaire de différentes couleurs a un même angle de polarisation et différentes directions d'émission, et N est un nombre entier supérieur à 1 ; et
   le module d'émetteur optique (202) est configuré pour recevoir la première lumière polarisée, et pour générer une deuxième lumière polarisée sur la base de la première lumière polarisée, dans lequel la deuxième lumière polarisée est utilisée pour diffuser des rayures en grille des N couleurs, et les rayures en grille de différentes couleurs ont différentes fréquences spatiales,
   dans lequel le module de source lumineuse (201) comprend N sources lumineuses monochromes, N modules de réglage d'angle et un module de combinaison de faisceaux, dans lequel
   chacune des N sources lumineuses monochromes est configurée pour émettre une lumière polarisée de manière linéaire d'une couleur correspondante ;
   chacun des N modules de réglage d'angle est configuré pour régler un angle de polarisation d'une lumière polarisée de manière linéaire à partir d'une source lumineuse monochrome correspondante vers un angle cible ; et
   le module de combinaison de faisceaux est configuré pour régler des directions d'émission de N faisceaux de lumière polarisée de manière linéaire à partir des N modules de réglage d'angle pour avoir différents angles inclus avec une direction cible, pour obtenir la première lumière polarisée.

2. Système optique selon la revendication 1, dans lequel le système optique (200) comprend en outre un module de détection optique (203) ; et
   le module de détection optique (203) est configuré pour recevoir une lumière polarisée cible correspondant à la deuxième lumière polarisée, et obtenir une pluralité d'images de rayures en grille cibles sur la base de la lumière polarisée cible, dans lequel la pluralité d'images de rayures en grille cibles comprend une pluralité d'images de rayures en grille cibles correspondant à chacune des N couleurs, et des phases initiales de rayures en grille dans au moins deux images de rayures en grille cibles correspondant à chaque couleur sont différentes.

3. Système optique selon la revendication 2, dans lequel le module de détection optique (203) comprend un module d'imagerie (601) et un module de détection de polarisation de couleur (602) ;

   le module d'imagerie (601) est configuré pour recevoir la lumière polarisée cible, dans lequel la lumière polarisée cible est utilisée pour diffuser des rayures en grille cibles initiales des N couleurs, et la rayure en grille cible initiale est une rayure en grille obtenue en modulant une rayure en grille diffusée par la deuxième lumière polarisée ; et
   le module de détection de polarisation de couleur (602) est configuré pour exécuter séparément un décalage de phase d'au moins deux valeurs de phase différentes sur une rayure en grille initiale correspondant à chaque couleur et générer la pluralité d'images de rayures en grille cibles correspondant à chaque couleur.

4. Système optique selon l'une quelconque des revendications 1 à 3, dans lequel le module de réglage d'angle comprend une plaque demi-onde, et le module de réglage d'angle est situé entre la source lumineuse monochrome correspondante et le module de combinaison de faisceaux.

5. Système optique selon l'une quelconque des revendications 1 à 4, dans lequel le module de combinaison de faisceaux comprend N-1 éléments de combinaison de faisceaux, dans lequel

   un premier élément de combinaison de faisceaux dans les N-1 éléments de combinaison de faisceaux est configuré pour : émettre une première lumière polarisée de manière linéaire à partir d'un premier module de réglage d'angle dans les N modules de réglage d'angle, réfléchir une deuxième lumière polarisée de manière linéaire à partir d'un deuxième module de réglage d'angle dans les N modules de réglage d'angle et commander des directions d'émission de la première lumière polarisée de manière linéaire et de la deuxième lumière polarisée de manière linéaire pour avoir différents angles inclus avec la direction cible ; ou
   le premier élément de combinaison de faisceaux est configuré pour : émettre une troisième lumière polarisée de manière linéaire à partir d'un deuxième élément de combinaison de faisceaux, réfléchir une quatrième lumière polarisée de manière linéaire à partir d'un troisième module de réglage d'angle dans les N modules de réglage d'angle et commander des directions d'émission de la troisième lumière polarisée de manière linéaire et de la quatrième lumière polarisée de manière linéaire pour avoir différents angles inclus avec la direction cible.

6. Système optique selon la revendication 5, dans lequel l'un quelconque des éléments de combinaison de faisceaux comprend un diviseur de faisceaux dichroïque.

7. Système optique selon l'une quelconque des revendications 1 à 6, dans lequel la direction cible est une direction d'émission d'une lumière polarisée de manière linéaire émise par une des N sources lumineuses monochromes.

8. Système optique selon l'une quelconque des revendications 1 à 7, dans lequel le module d' émetteur optique (202) comprend un premier module de division optique, un module de réglage de direction, un deuxième module de division optique et un module de réglage de polarisation, dans lequel

le premier module de division optique est configuré pour recevoir la première lumière polarisée et diviser la première lumière polarisée en une première lumière polarisée de manière linéaire le long d'une première direction et une deuxième lumière polarisée de manière linéaire le long d'une deuxième direction ;
le module de réglage de direction est configuré pour recevoir la deuxième lumière polarisée de manière linéaire, et régler la direction d'émission de la deuxième lumière polarisée de manière linéaire vers une troisième direction ;
le deuxième module de division optique est configuré pour recevoir la première lumière polarisée de manière linéaire à partir du premier module de division optique et la deuxième lumière polarisée de manière linéaire à partir du module de réglage de direction, et générer une lumière d'interférence obtenue par l'interférence de la première lumière polarisée de manière linéaire et de la deuxième lumière polarisée de manière linéaire ; et
le module de réglage de polarisation est configuré pour recevoir la lumière d'interférence et régler un type de polarisation de la lumière d'interférence à un type de polarisation circulaire, pour obtenir la deuxième lumière polarisée.

9. Système optique selon la revendication 8, dans lequel le module de réglage de direction comprend un premier réflecteur et un deuxième réflecteur ;

le premier réflecteur est configuré pour recevoir la deuxième lumière polarisée de manière linéaire à partir du premier module de division optique et réfléchir la deuxième lumière polarisée de manière linéaire reçue vers le deuxième réflecteur ; et
le deuxième réflecteur est configuré pour réfléchir la deuxième lumière polarisée de manière linéaire reçue, de sorte qu'après avoir été réfléchie, la deuxième lumière polarisée de manière linéaire est incidente sur le deuxième module de division optique le long de la troisième direction.

10. Système optique selon la revendication 8 ou 9, dans lequel la deuxième direction est perpendiculaire à la première direction.

11. Système optique selon l'une quelconque des revendications 8 à 10, dans lequel le premier module de division optique et le deuxième module de division optique comprennent un diviseur de faisceaux de polarisation.

12. Système optique selon l'une quelconque des revendications 8 à 11, dans lequel le module d'émetteur optique (202) comprend en outre un module de projection, et le module de projection est configuré pour recevoir la deuxième lumière polarisée et diffuser la deuxième lumière polarisée vers un objet cible.

13. Système optique selon la revendication 12, dans lequel le module de réglage de polarisation comprend une plaque quart d'onde et est localisé entre le deuxième module de division optique et le module de projection.

14. Appareil, dans lequel l'appareil comprend le système optique selon l'une quelconque des revendications 1 à 13.

FIG. 1

FIG. 2

FIG. 3

FIG. 4

Optical transmitter module 202

Polarization adjustment module 504

First optical splitting module 501

Second optical splitting module 503

Second linearly polarized light

Interference light

First linearly polarized light

Projection module 507

Direction adjustment module 502

First reflector 505

Second reflector 506

FIG. 5

Optical detection module 203

Imaging module 601

Color polarization detection module 602

FIG. 6

Micro lens array

Polarization array

Pixel array

| 0-degree polarization phase shifting | 45-degree polarization phase shifting | 90-degree polarization phase shifting | 135-degree polarization phase shifting |

| Red | Green | Blue | Micro lens |

FIG. 7

Pixel

Polarization array

Pixel array

| 0-degree polarization phase shifting | 45-degree polarization phase shifting | 90-degree polarization phase shifting | 135-degree polarization phase shifting |

Red

Green

Blue

FIG. 8

(a)

(b)

(c)

FIG. 9

FIG. 10A

EP 4 286 791 B1

FIG. 10B

EP 4 286 791 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104614925 A
- CN 109163673 A
- CN 110186390 A